# EUROPEAN PATENT APPLICATION

(11) **EP 4 148 965 A1**
(43) Date of publication of application: **15.03.2023**
(21) Application number: 22190602.7
(22) Date of filing: 16.08.2022
(51) Int. Cl.: H02M 1/34, H02M 3/335

(54) **ISOLATED CONVERTER**

(30) Priority: 10.09.2021 US 202163261102 P; 10.03.2022 CN 202210233288
(71) Applicant: Delta Electronics, Inc., Taoyuan City 333 (TW)
(72) Inventor: HUANG, Wen-Yu, Taoyuan City 333 (TW); WANG, Shih-Hsun, Taoyuan City 333 (TW); LIN, Hung-Chuan, Taoyuan City 333 (TW)
(74) Representative: Nederlandsch Octrooibureau

(57) **Abstract**

An isolated converter includes an input circuit, a transformer, a first switch, a second switch and a snubber circuit. The input circuit includes at least two input capacitors, and is configured to provide an input voltage. A divider node is arranged between the at least two input capacitors. The transformer includes a primary winding and a secondary winding to generate an output voltage on the secondary winding according to the input voltage. The primary winding of the transformer is electrically connected between the first switch and the second switch. The snubber circuit is electrically connected between the first switch and the second switch, and forms a discharge path with the primary winding. The snubber circuit is configured to receive a reflected voltage from the secondary winding back to the primary winding, and the divider node is connected to the discharge path.

## Description

### BACKGROUND

### Technical Field

The present disclosure relates to an isolated converter, especially a circuit structure configured to convert an input voltage to an output voltage.

### Description of Related Art

With the rapid development of technology, voltage converters have been widely used in various electronic device. The voltage converter can convert an input voltage with one voltage level on the input terminal to an output voltage with another voltage level on the output terminal. However, during operation, the various electronic components in the voltage converter must be able to withstand voltage changes in the circuit in order to provide the output voltage stably.

### SUMMARY

One aspect of the present disclosure is an isolated converter, comprising an input circuit, a transformer, a first switch and a second switch and a snubber circuit. The input circuit comprises at least two input capacitors, and is configured to provide an input voltage, wherein a divider node is arranged between the at least two input capacitors. The transformer comprises a primary winding and a secondary winding, and is configured to generate an output voltage on the secondary winding according to the input voltage. The primary winding of the transformer is electrically connected between the first switch and the second switch. The snubber circuit is electrically connected between the first switch and the second switch, and is configured to formed a discharge path with the primary winding. The snubber circuit is configured to receive a reflected voltage from the secondary winding back to the primary winding, and the divider node is connected to the discharge path.

Another aspect of the present disclosure is an isolated converter, comprising: an input circuit comprising at least two input capacitors, and configured to provide an input voltage, wherein a divider node between the at least two input capacitors has a divided voltage; a transformer comprising a primary winding and a secondary winding, and configured to generate an output voltage on the secondary winding according to the input voltage; a first switch and a second switch, wherein the primary winding of the transformer is electrically connected between the first switch and the second switch; and a snubber circuit electrically connected between the first switch and the second switch, and configured to formed a discharge path with the primary winding to receive a reflected voltage from the secondary winding back to the primary winding, wherein a node on the discharge path is fixed to the divided voltage.

It is to be understood that both the foregoing general description and the following detailed description are by examples, and are intended to provide further explanation of the disclosure as claimed.

### BRIEF DESCRIPTION OF THE DRAWINGS

The present disclosure can be more fully understood by reading the following detailed description of the embodiment, with reference made to the accompanying drawings as follows:
FIG. 1 is a schematic diagram of an isolated converter in some embodiments of the present disclosure.
FIG. 2A - FIG. 2C are schematic diagrams of the operation of the isolated converter in some embodiments of the present disclosure.
FIG. 3 is another schematic diagram of an isolated converter in some embodiments of the present disclosure.
FIG. 4 is another schematic diagram of an isolated converter in some embodiments of the present disclosure.
FIG. 5A - FIG. 5F are schematic diagrams of an isolated converter in some embodiments of the present disclosure.
FIG. 6 is another schematic diagram of an isolated converter in some embodiments of the present disclosure.
FIG. 7 is another schematic diagram of an isolated converter in some embodiments of the present disclosure.

### DETAILED DESCRIPTION

For the embodiment below is described in detail with the accompanying drawings, embodiments are not provided to limit the scope of the present disclosure. Moreover, the operation of the described structure is not for limiting the order of implementation. Any device with equivalent functions that is produced from a structure formed by a recombination of elements is all covered by the scope of the present disclosure. Drawings are for the purpose of illustration only, and not plotted in accordance with the original size.

It will be understood that when an element is referred to as being "connected to" or "coupled to", it can be directly connected or coupled to the other element or intervening elements may be present. In contrast, when an element to another element is referred to as being "directly connected" or "directly coupled," there are no intervening elements present. As used herein, the term "and / or" includes an associated listed items or any and all combinations of more.

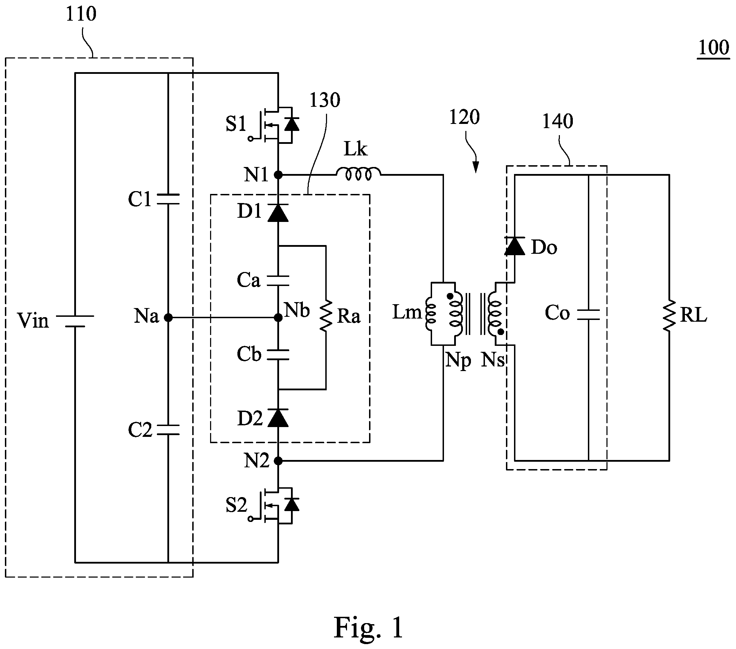

FIG. 1 is a schematic diagram of an isolated converter 100 in some embodiments of the present disclosure. The isolated converter 100 includes an input circuit 110, a transformer 120, a first switch S1, a second switch S2, an output circuit 140 and a snubber circuit 130. The input circuit 110 is configured to receive an input voltage provided by the input power Vin through at least two input capacitors C1 and C2. For the convenience of description, the node connecting the first capacitor C1 and the second capacitor C2 is referred to as "divider node Na".

In one embodiment, the capacitances of the first capacitor C1 and the second capacitor C2 are the same, so when the input circuit 110 stores the input voltage, the voltage of the divider node will be "half of the input voltage". However, the present disclosure is not limited to this, in other embodiments, the capacitances of the first capacitor C1 and the second capacitor C2 may be different from each other.

In one embodiment, the input circuit 110 is connected to the DC power supply (input power Vin). In some embodiments, the input circuit 110 includes a rectifier circuit (e.g., Bridge Rectifier), which is configured to receive a AC power supply, and is configured to store the rectified input voltage to the input capacitors C1, C2.

The transformer 120 includes a primary winding Np and a secondary winding Ns. In one embodiment, the positive and negative positions of the polarities of the primary winding Np and the secondary winding Ns are opposite to each other. The primary winding Np is electrically connected to the input circuit 110, is configured to receive the input voltage transmitted from the input circuit 110, and the secondary winding Ns generates the output voltage by mutual inductance according to the input voltage. In addition, the transformer 120 includes a magnetizing inductance Lm and a leakage inductance Lk. In some embodiments, the isolated converter 100 may be a Boost converter or a Buck converter.

The first switch S1 and the second switch S2 are electrically connected to two ends of the primary winding Np, respectively. In other words, the primary winding Np of the transformer 120 is electrically connected between the first switch S1 and the second switch S2. For the convenience of description, the two ends of the primary winding Np are referred to as the first node N1 and the second node N2 here.

In the embodiment of FIG. 1, the first switch S1 and the second switch S2 are implemented by N-type metal oxide semiconductor field effect transistors (N-Type MOSFET), but the present disclosure is not limited to this. In other embodiments, the first switch S1 and the second switch S2 can also be implemented by P-Type Metal Oxide Semiconductor Field Effect Transistor (P-Type MOSFET) or implemented by other types of switching elements.

The output circuit 140 is electrically connected to the secondary winding Ns, and includes a diode Do and an output capacitor Co. When the primary winding Np stops receiving the input voltage(i.e., when the first switch S1 and the second switch S2 are turned off), the output circuit 140 receives output power from the secondary winding and outputs it to a load RL. In other words, the isolated converter 100 is implemented by a flyback converter. In other embodiments, the isolated converter can also be implemented by a forward converter, and the structure will be described in the following paragraphs.

The snubber circuit 130 is electrically connected between the first switch S1 and the second switch S2 (i.e., between the first node N1 and the second node N2, and connected to the primary winding Np in parallel). The primary winding Np of the snubber circuit 130 and the transformer 120 can form a discharge path, is configured to absorb the leakage inductance Lk and/or the energy of the secondary winding Ns reflected back to the primary winding Np. In other words, when the first switch S1 and the second switch S2 are turned off, the leakage inductance Lk and/or the energy of the secondary winding Ns reflected back to the primary winding Np can be discharged to the snubber circuit 130. In addition, the divider node Na is electrically connected to the discharge path, so that the voltage of one node on the discharge path is fixed to a divided voltage of the divider node Na.

In some embodiments, the snubber circuit 130 includes multiple snubber capacitors Ca, Cb and at least one impedance element Ra. The divider node Na is electrically connected to a node Nb between the snubber capacitor Ca and the snubber capacitor Cb. Specifically, the first snubber capacitor Ca is electrically connected to the first switch S1 and the divider node Na. The second snubber capacitor Cb is electrically connected to the second switch S2 and the divider node Na. The impedance element Ra is electrically connected between the first switch S1 and the second switch S2. However, the position where the divider node Na is connected to the discharge path is not limited to the structure shown in FIG. 1, and other connection methods will be explained in the following paragraphs.

For the present disclosure, the divider node Na is connected to the discharge path, so that the isolated converter 100 determines a cross-pressure of the first switch S1 and a cross-pressure of the second switch S2 according to the divided voltage of the divider node Na and a part of the discharge energy. For example, if the capacitances of the input capacitors C1, C2 are equal, the capacitances of the snubber capacitors Ca, Cb are equal, and the energy of the leakage inductance is ignored, then the energy stored by each of the input capacitors C1, C2 is half of the input voltage, and the energy stored in each of the snubber capacitor Ca, Cb is half of the reflected voltage. Accordingly, the cross-pressure that the first switch S1 and the second switch S2 need to withstand can be controlled to be smaller.

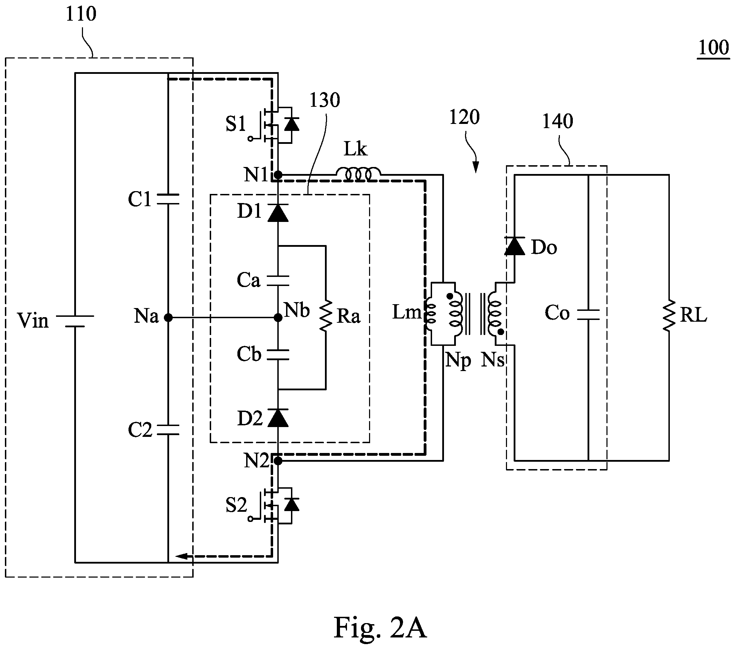

FIG. 2A - FIG. 2C are schematic diagrams of the operation of the isolated converter 100 in some embodiments of the present disclosure. As shown in FIG. 2A, when the first switch S1 and the second switch S2 are turned on, the primary winding Np receives the input voltage. At this time, since the diode of the output circuit 140 is not turned on, the secondary winding Ns does not generate the output voltage or current.

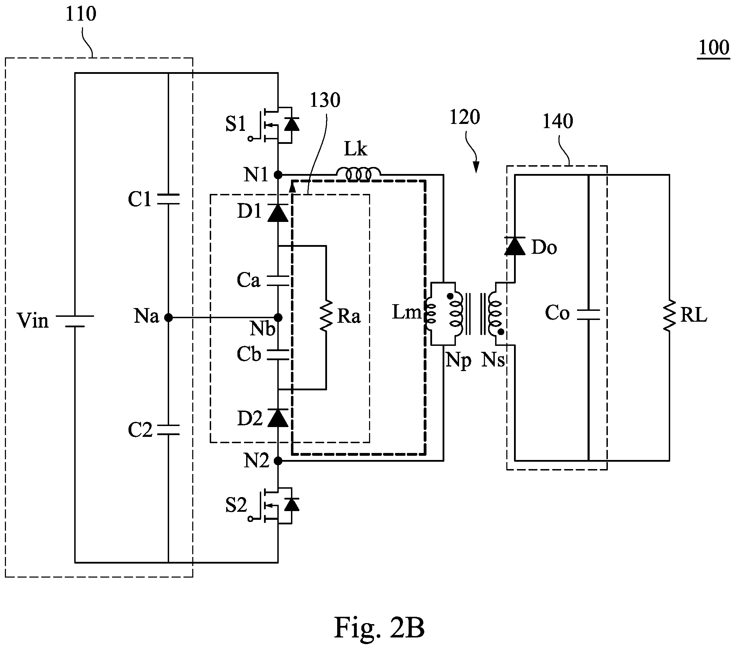

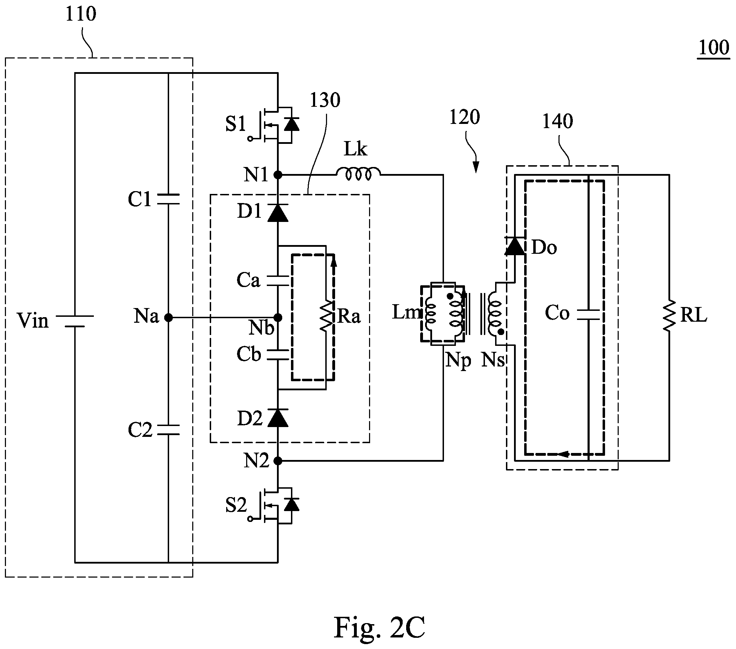

FIG.2B and FIG. 2C show the current change after the first switch S1 and the second switch S2 are turned off. In order to avoid the complexity of the figure, it is divided into two figures for description. After the first switch S1 and the second switch S2 are turned off, the secondary winding Ns provides the output voltage to the load RL. At the same time, the leakage inductance Lk of the primary winding Np and the reflected voltage from the secondary winding Ns back to the primary winding Np release energy to the snubber circuit 130 by the discharge path (as shown by the arrow in FIG. 2B), so that the snubber capacitors Ca, Cb absorb the energy. Then, as shown in FIG. 2C, the snubber capacitors Ca, Cb will release the absorbed energy to the impedance element Ra.

As shown in figure, the snubber capacitor Ca, Cb is configured to receive the leakage inductance Lk and the reflected voltage. Therefore, the cross-pressure of the first switch S1 is approximately equal to the sum of the voltages stored in the first input capacitors C1 and the snubber capacitor Ca. Similarly, the cross-pressure of the second switch S2 is approximately equal to the sum of the voltages stored in the second input capacitors C2 and the snubber capacitor Cb.

For example, the input voltage provided by the input power is 1500V, then each input capacitors C1, C2 respectively store 750V, and the divided voltage of the divider node Na is 750V. In addition, if the reflected voltage from the secondary winding Ns back to the primary winding Np is 120V, then the voltages stored by the snubber capacitor Ca, Cb are 60V, respectively. Therefore, the cross-pressure of the first switch S1 will be "750V+60V". Similarly, the cross-pressure of the second switch S2 is also "750V+60V". Since the energy stored by the snubber capacitors Ca, Cb respectively is usually not greater than the energy stored by the input capacitors C1, C2, therefore, by connecting the divider node Na to the discharge path, the cross-pressure of the first switch S1 or the cross-pressure of the second switch S2 will be controlled to be less than the input voltage. In other words, the withstand voltage required for the first switch S1 or the second switch S2 can be reduced

In addition, in some embodiments, the snubber circuit 130 includes at least one diode, such as diodes D1, D2. The conduction direction of the diodes D1, D2 is the same as the current direction of the discharge path.

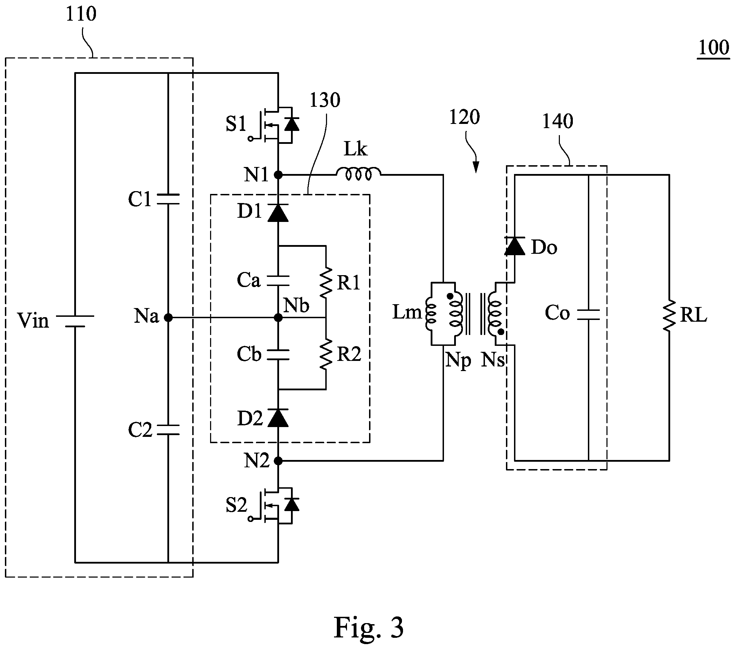

FIG. 3 is another schematic diagram of an isolated converter in some embodiments of the present disclosure. In this embodiment, the snubber circuit 130 includes multiple impedance elements R1, R2. Specifically, the first impedance element R1 is connected in parallel with the first snubber capacitor Ca, the second impedance element R2 is connected in parallel with the second snubber capacitor Cb. Accordingly, when the snubber circuit 130 discharging, the first snubber capacitor Ca is discharged to the first impedance element R1, and the second snubber capacitor Cb is discharged to the second impedance element R2.

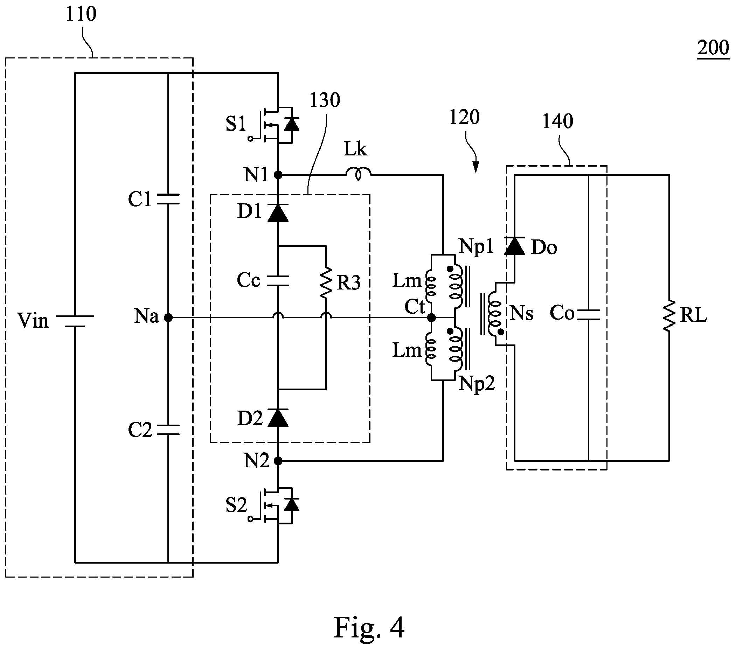

FIG. 4 is another schematic diagram of an isolated converter 200 in some embodiments of the present disclosure. In FIG. 4, the similar components associated with the embodiment of FIG. 1 are labeled with the same numerals for ease of understanding. The specific principle of the similar component has been explained in detail in the previous paragraphs, and unless it has a cooperative relationship with the components of FIG. 4, it is not repeated here.

In this embodiment, the divider node Na is connecte to a center tap Ct of the primary winding Np. The center tap Ct is configured to divide the primary winding Np into two windings Np1, Np2. Windings Np1, Np2 have the same number of turns, but the present disclosure is not limited to this. The divider node Na is electrically connected to the center tap Ct. In the embodiment shown in FIG. 4, the first switch S1 and the second switch S2 are alternately turned on and off to generate the output voltage on the secondary winding Ns. When the secondary winding Ns outputs the output voltage, the reflected voltage from the secondary winding Ns back to the primary winding Np is distributed to the windings Np1, Np2. Therefore, the cross-pressure of the first switch S1 will be determined by the energy stored by the first input capacitor C1 and the winding Np1. The cross-pressure of the second switch S2 will be determined by the energy stored in the second input capacitor C2 and the winding Np2. Accordingly, the cross-pressure of the first switch S1 and the cross-pressure of the second switch S2 can also be controlled.

As mentioned above, in this embodiment, the snubber circuit 130 includes a snubber capacitor Cc and an impedance element R3. The snubber capacitor Cc and the impedance element R3 are electrically connected between the first switch S1 and the second switch S2, and the snubber capacitor Cc is connected in parallel with the impedance element R3.

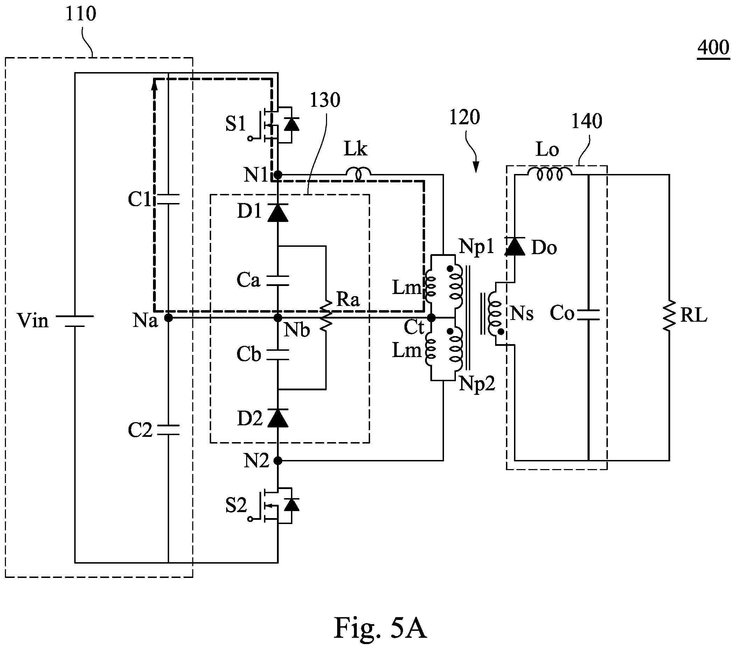

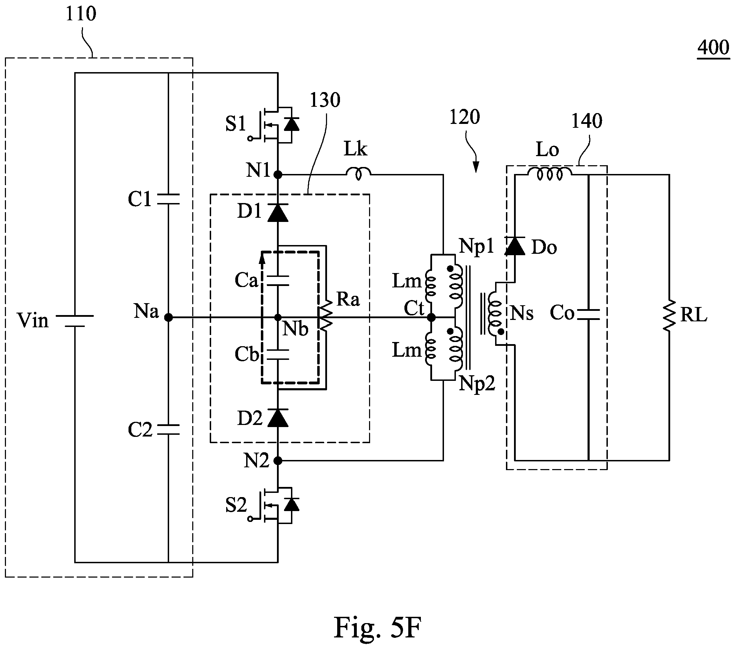

In the above embodiments, the divider node Na is connected to the node Nb or the center tap Ct, but in some other embodiment, the divider node Na may be connected to both the node Nb and the center tap Ct. FIG. 5A - FIG. 5F are schematic diagrams of an isolated converter 400 in some embodiments of the present disclosure. In FIG. 5A-FIG.5F, the similar components associated with the embodiment of FIG. 1 are labeled with the same numerals for ease of understanding. The specific principle of the similar component has been explained in detail in the previous paragraphs, and unless it has a cooperative relationship with the components of FIG. 5A-FIG.5F, it is not repeated here.

In this embodiment, the divider node Na is connected to both the node Nb and the center tap Ct. In addition, the first switch S1 and the second switch S2 are alternately turned on and off to generate the output voltage on the secondary winding. In other words, the isolated converter 400 is implemented by an interleaving converter.

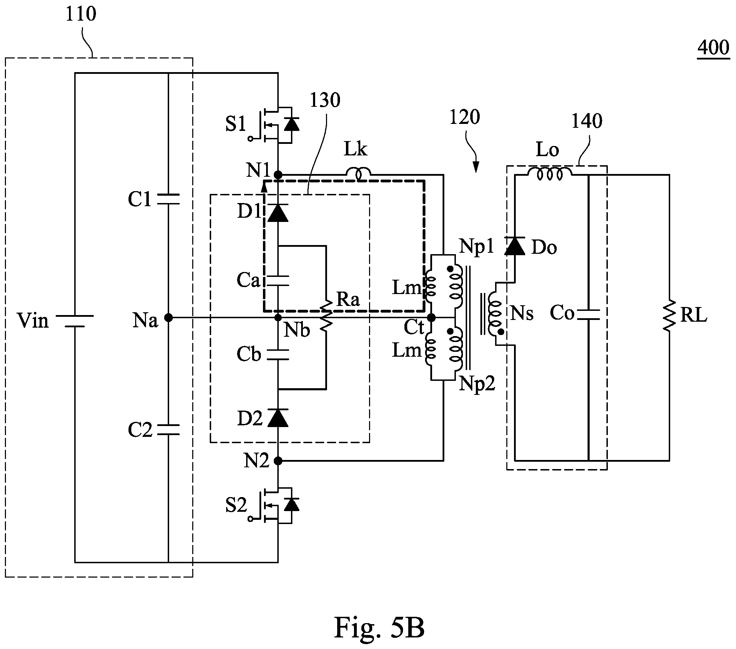

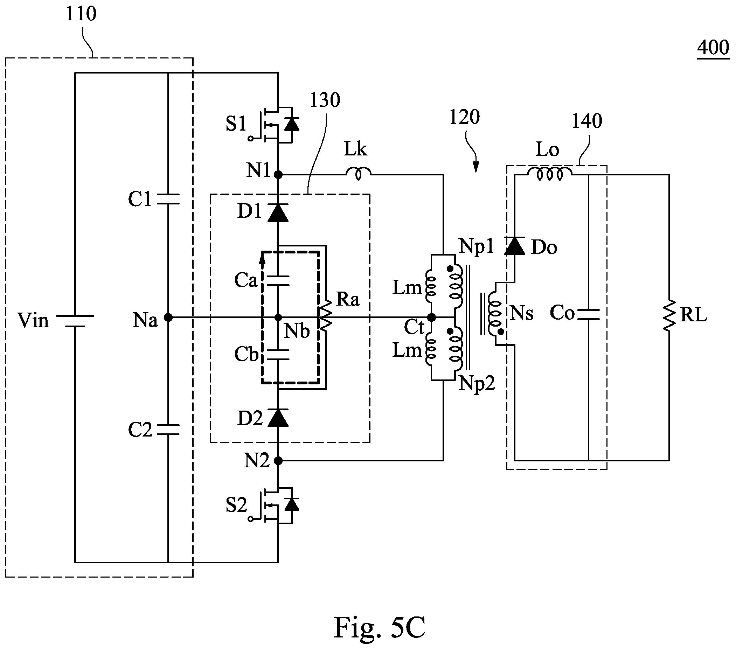

As shown in FIG. 5A, when the first switch S1 is turned on and the second switch S2 is turned off, the first input capacitors C1 provide a part of the input voltage to the winding Np1. As shown in FIG. 5B and FIG. 5C (in order to avoid the complexity of the diagram, the state of the switches S1 and S2 after being turned off is divided into two figures to represent), when the first switch S1 is turned off, a first discharge path is formed between the winding Np1 and the first snubber capacitor Ca (as shown by the arrow in FIG. 5B). At this time, the first snubber capacitor Ca receives the leakage inductance Lk and the reflected voltage from the secondary winding Ns back to the winding Np1. Then, the first snubber capacitor Ca releases the received energy to the impedance element Ra of the snubber circuit 130.

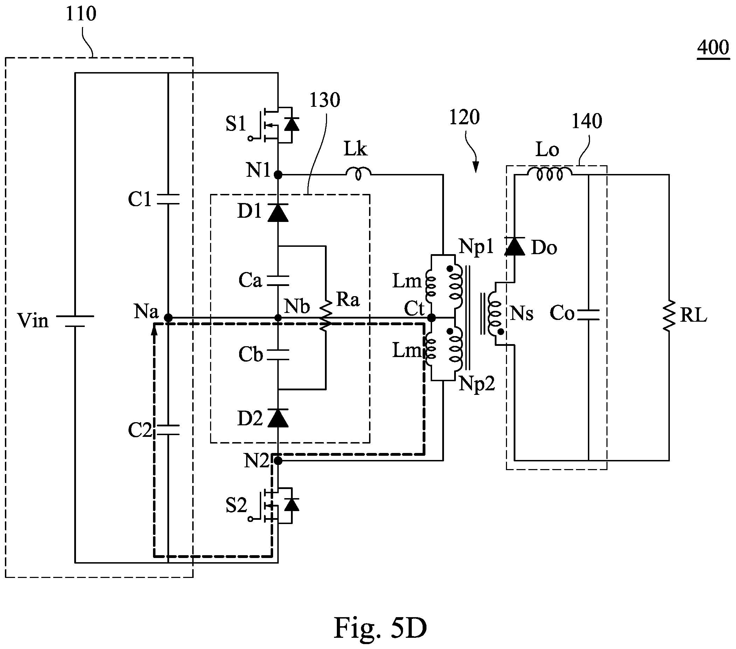

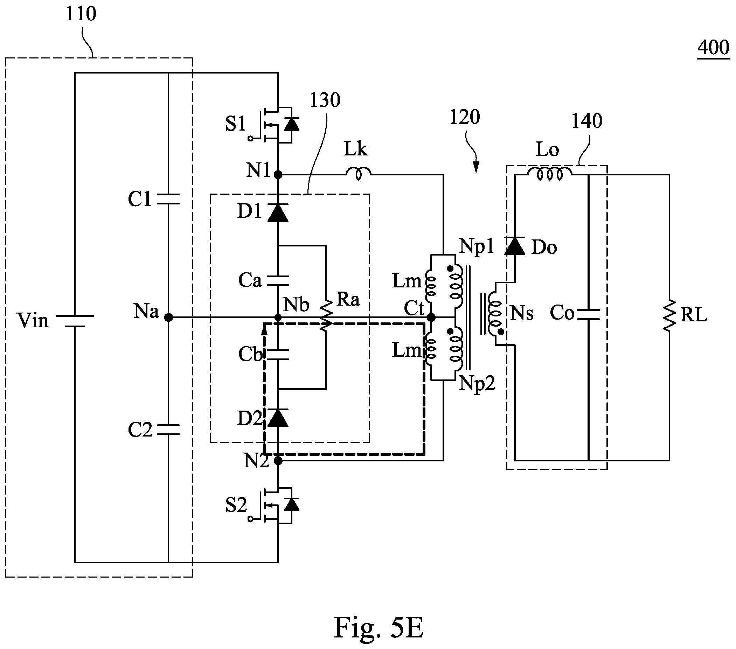

Similarly, as shown in FIG. 5D, when the first switch S1 is turned off and the second switch S2 is turned on, the second input capacitors C2 provide a part of the input voltage to the winding Np2. As shown in FIG. 5B and FIG. 5C, when the second switch S2 is turned off, a second discharge path is formed between the winding Np2 and the second snubber capacitor Cb (as shown by the arrows in FIG. 5E). At this time, the second snubber capacitor Cb receives the reflected voltage from the secondary winding Ns back to the winding Np2. Then, the second snubber capacitor Cb releases the received energy to the impedance element Ra of the snubber circuit 130.

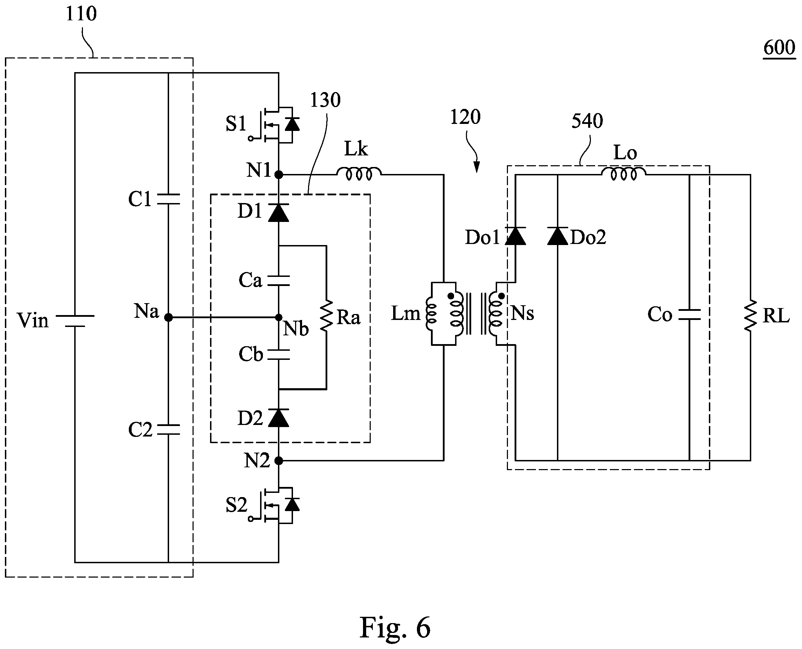

As mentioned above, in some embodiments, the isolated converter may implemented to a forward converte. FIG. 6 is another schematic diagram of an isolated converter 500 in some embodiments of the present disclosure. In FIG. 6, the similar components associated with the embodiment of FIG. 1 are labeled with the same numerals for ease of understanding. The specific principle of the similar component has been explained in detail in the previous paragraphs, and unless it has a cooperative relationship with the components of FIG. 6, it is not repeated here. In this embodiment, the output circuit 540 is electrically connected to the secondary winding Ns. The output circuit 540 includes an input inductance Lo, diodes Do1, Do2 and an output capacitor Co. When the windings Np1, Np2 receive the input voltage, and the secondary winding Ns generates the output voltage, the output circuit 540 is configured to provide output power to the load.

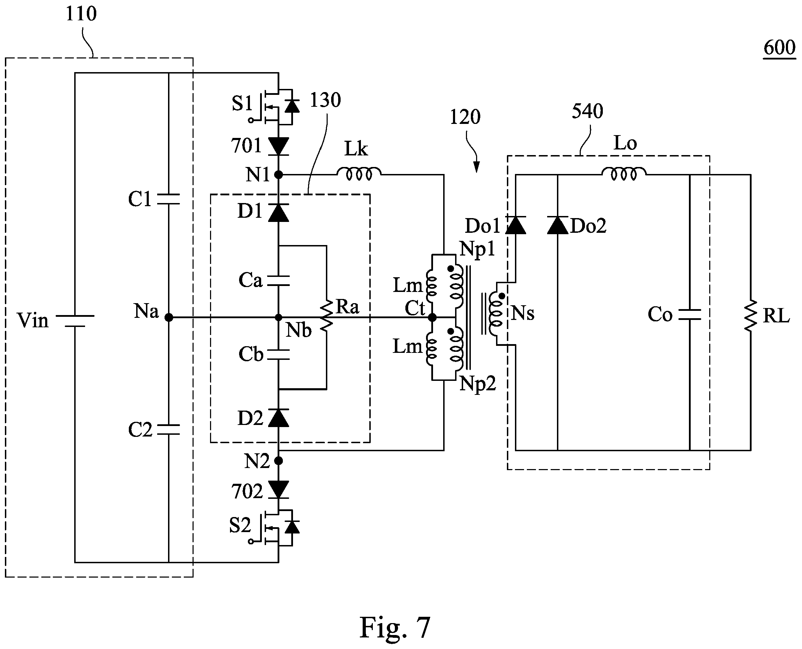

FIG. 7 is another schematic diagram of an isolated converter 600 in some embodiments of the present disclosure. In FIG. 7, the similar components associated with the embodiments of FIG. 1 and FIG. 6 are labeled with the same numerals for ease of understanding. The specific principle of the similar component has been explained in detail in the previous paragraphs, and unless it has a cooperative relationship with the components of FIG. 7, it is not repeated here.

In this embodiment, the isolated converter 700 includes at least one one-way switch (e.g.,the one-way switches 701, 702 may be implemented by diode). The one-way switch 701, 702 is electrically connected to the primary winding Np. The conduction direction of the one-way switches 701, 702 is opposite to the conduction direction of the diode in the snubber circuit 130. When the first switch S1 or the second switch S2 is turned off, the one-way switches 701, 702 are configured to prevent current from flowing to the first switch S1 or the second switch S2. For example, when the first switch S1 is turned on, and the second switch S2 is turned off, if the number of turns of the windings Np1 and Np2 are not equal (e.g., the number of turns of winding Np1 is less than the number of turns of winding Np2), the difference in the induced voltages will form a current, which may flow through the parasitic diode of the second switch S2. The one-way switch 702 is configured to prevent the abnormal current path in this situation.

The elements, method steps, or technical features in the foregoing embodiments may be combined with each other, and are not limited to the order of the specification description or the order of the drawings in the present disclosure.

## Claims

1. An isolated converter (100, 200, 300, 400, 500), **characterized in that**, comprising:
an input circuit (110) comprising at least two input capacitors (C1-C2), and configured to provide an input voltage, wherein a divider node (Na) is arranged between the at least two input capacitors (C1-C2);
a transformer (120) comprising a primary winding (Np) and a secondary winding (Ns), and configured to generate an output voltage on the secondary winding (Ns) according to the input voltage;
a first switch (S1) and a second switch (S2), wherein the primary winding (Np) of the transformer (120) is electrically connected between the first switch (S1) and the second switch (S2); and
a snubber circuit (130) electrically connected between the first switch (S1) and the second switch (S2), and configured to formed a discharge path with the primary winding (Np), wherein the snubber circuit (130) is configured to receive a reflected voltage from the secondary winding (Ns) back to the primary winding (Np), and the divider node (Na) is connected to the discharge path.

2. The isolated converter of claim 1, wherein the divider node (Na) is electrically connected between a plurality of snubber capacitors in the snubber circuit (130).

3. The isolated converter of claim 2, wherein the plurality of snubber capacitors comprises a first snubber capacitor (Ca) and a second snubber capacitor (Cb), the first snubber capacitor (Ca) is electrically connected to the first switch (S1) and the divider node (Na), the second snubber capacitor (Cb) is electrically connected to the second switch (S2) and the divider node (Na), and the isolated converter (100, 200, 300, 400, 500) further comprises:
at least one impedance element (Ra, R1-R3) electrically connected between the first switch (S1) and the second switch (S2).

4. The isolated converter of claim 3, wherein the at least one impedance element (Ra, R1-R3) comprises:
a first impedance element (R1) connected in parallel with the first snubber capacitor (Ca); and
a second impedance element (R2) connected in parallel with the second snubber capacitor (Cb).

5. The isolated converter of claim 1, wherein the divider node (Na) is connected to a center tap of the primary winding (Np).

6. The isolated converter of claim 5, wherein the snubber circuit (130) comprises:
a snubber capacitor (Cc) electrically connected between the first switch (S1) and the second switch (S2); and
an impedance element (R3) electrically connected between the first switch (S1) and the second switch (S2).

7. The isolated converter of claim 5, wherein the first switch (S1) and the second switch (S2) are alternately turned on to generate the output voltage on the secondary winding (Ns).

8. The isolated converter of claim 7, further comprising:
at least one one-way switch (701,702) electrically connected to the primary winding (Np), wherein when the first switch (S1) or the second switch (S2) is turned off, the at least one one-way switch (701,702) is configured to prevent a current from flowing to the first switch (S1) or the second switch (S2).

9. The isolated converter of claim 8, wherein the snubber circuit (130) further comprises at least one diode (D1, D2), and a conduction direction of the at least one diode (D1, D2) is opposite to a conduction direction of the at least one one-way switch (701,702).

10. The isolated converter of claim 1, wherein the divider node (Na) is connected between a plurality of snubber capacitors (Ca-Cc), and is connected to a center tap of the primary winding (Np).
